# EUROPÄISCHE PATENTSCHRIFT

(11) **EP 0 452 822 B1**
(45) Veröffentlichungstag und Bekanntmachung des Hinweises auf die Patenterteilung: **31.08.1994**
(21) Anmeldenummer: 91105862.6
(22) Anmeldetag: 12.04.1991
(51) Int. Cl.: G02B 21/22

(54) **Operationsmikroskop für mindestens zwei Operateure**
Operation microscope for at least two surgeons
Microscope d'opération pour au moins deux chirurgiens

(30) Priorität: 20.04.1990 DE 4012552
(43) Veröffentlichungstag der Anmeldung: 23.10.1991
(73) Patentinhaber: Leica AG, CH-9435 Heerbrugg (CH)
(72) Erfinder: Hildebrand, Klaus, Dr., CH-9435 Heerbrugg (CH); Metz, Jürgen, CH-9436 Balgach (CH); Zimmer, Klaus-Peter, CH-9435 Heerbrugg (CH); Schulz, Luitpold, CH-9443 Widnau (CH); Suhner, Heinz, CH-9445 Rebstein (CH)

(56) Entgegenhaltungen:
- EP-A- 0 090 982
- EP-A- 0 389 295
- CH-A- 0 399 772
- DE-A- 2 822 277
- DE-A- 3 515 004
- DE-A- 3 523 639
- DE-A- 3 740 737
- INTERNATIONAL LABORATORY, Band 11, Nr. 7, Oktober 1981, Seiten 66-73, Connecticut, US ; R. L. SEIDENBERG : "Stereomicroscopy : A Review".

## Beschreibung

Die Erfindung betrifft ein Operationsmikroskop mit einem Hauptobjektiv und nachgeordneten optischen Systemen zur Veränderung des Vergrößerungsmaßstabes sowie zur Innenfokussierung gemäß dem Oberbegriff des Anspruchs 1.

Derartige Mikroskope werden beispielsweise bei mikrochirurgischen Eingriffen im klinischen Bereich eingesetzt. Durch immer komplexer werdende Operationsmethoden ist es notwendig, daß mehrere Operateure an einer Operationsstelle gleichzeitig arbeiten können. Darüber hinaus ist es bei den verschiedenen Operationsdisziplinen erforderlich, daß die Operateure ihre Arbeitshaltung und Arbeitsstellung zum Objekt individuell gestalten müssen.

Ein Operationsmikroskop für zwei Chirurgen ist beispielsweise aus der DE-OS 29 49 428 bekannt. Das in dieser Schrift dargestellte Operationsmikroskop weist ein Hauptobjektiv auf, dem drei separat ausgeführte Beobachtungsstrahlengänge für zwei Beobachtungstuben nachgeordnet sind. Zur Realisierung von zwei stereoskopischen Beobachtungsstrahlengängen wird hier einer der Strahlengänge gemeinsam genutzt. Dadurch ist es hier nicht möglich, den Abbildungsmaßstab individuell zu beeinflussen.

Eine derartige individuelle Einstellung der Beobachtungsstrahlengänge ist aus der DE-OS 33 33 471 bekannt. Zwei separate Operationsmikroskope sind hier unter einem Winkel von 90° zueinander angeordnet und weisen je ein Objektiv, einen Vergrößerungswechsler und einen Binokulartubus auf. Über einen teildurchlässigen und unter 45° angeordneten Spiegel wird das vom Objekt kommende Licht über die beiden Objektive in die jeweiligen separaten Beobachtungsstrahlengänge gelenkt. Nachteilig ist hier insbesondere die Verwendung eines teildurchlässigen Spiegels, da dadurch das zur Beobachtung zur Verfügung stehende Licht um 50% gemindert wird.

Aus der DE-OS 36 02 095 und der DE-OS 35 23 639 sind Operationsmikroskope für einen Bediener und einen Mitarbeiter bekannt, die ein gemeinsames Hauptobjektiv und voneinander getrennt ausgeführte Beobachtungsstrahlengänge aufweisen. Um unabhängig vom jeweiligen Standpunkt beiden Bedienern die gleiche Ansicht vom zu untersuchenden Objektfeld zu ermöglichen, wird über zusätzliche optische Mittel einer der stereoskopischen Strahlengänge um die optische Achse des Hauptobjektivs gedreht. Beide stereoskopischen Strahlengänge weisen zur Änderung des Abbildungsmaßstabes Vario-Objektive auf. Neben dem beträchtlichen mechanischen Aufwand ist es hier außerdem nicht möglich, eine unabhängige Fokussierung der einzelnen Beobachtungsstrahlengänge durchzuführen. Der Oberbegriff des Anspruchs 1 entspricht der DE-OS 35 23 639.

Aus der US-PS 4 138 191 ist ein Operationsmikroskop für zwei Operateure bekannt, bei dem zwei separate stereoskopische Beobachtungsstrahlengänge mit einem gemeinsamen Hauptobjektiv realisiert sind. Zusätzlich wird hier die Möglichkeit beschrieben, einen zusätzlichen separaten Strahlengang für fotografische Aufnahmen zu nutzen. Nachteilig ist hier die fehlende Möglichkeit, beide stereoskopische Beobachtungsstrahlengänge individuell zu fokussieren.

Ferner ist aus der DE-OS 32 02 075 ein optisches System mit variabler Schnitt- und Brennweite für Operationsmikroskope mit einem Hauptobjektiv fester Brennweite bekannt. Die hier realisierte Innenfokussierung enthält ein Zoom-System mit mehreren Linsengruppen, die zur Einhaltung des stereoskopischen Beobachtungsbildes bei der Fokussierung und bei der Änderung des Abbildungsmaßstabes nicht nur entlang der optischen Achse des Hauptobjektivs bewegt werden, sondern gleichzeitig auch eine Bewegung senkrecht zu dieser Achse stattfindet. Die hieraus resultierende kurvenförmige Bewegung bedingt einen hohen mechanischen Aufwand bei der exakten Führung und Kopplung der Linsenglieder.

Aus der EP-A- 90 982 ist ein Prismenkompensator für stereoskopische Beobachtungsgeräte bekannt.

Es ist daher Aufgabe der vorliegenden Erfindung, ein Operationsmikroskop der eingangs genannten Art derart weiterzubilden, daß bei weitgehend gleichem Objektfeld jeder Operateur eine individuelle Vergrößerung und eine individuelle Schärfeebene einstellen kann, wobei der dazu erforderliche Antriebsmechanismus einen einfachen technischen Aufbau haben soll.

Diese Aufgabe wird erfindungsgemäß durch die kennzeichnenden Merkmale des Anspruchs 1 gelöst.

Vorteilhafte Weiterbildungen sind Gegenstand der Unteransprüche.

Mit diesen vorteilhaften Weiterbildungen wird insbesondere erreicht, daß bei unterschiedlichen Operationsdisziplinen die Arbeitshaltung der Operateure individuell angepaßt werden kann und somit auch ein individueller Arbeitsabstand von der Operationsstelle bzw. dem Objekt erreicht wird.

Die Erfindung ist in Ausführungsbeispielen in den schematischen Zeichnungen dargestellt. Es zeigen:
- Fig. 1: die Anordnung von zwei separaten stereoskopischen Beobachtungsstrahlengängen in einem Operationsmikroskop,
- Fig. 2: Innenfokussierung,
- Fig. 3: die Fassung eines Drehkeilpaares mit Steuerglied
- Fig. 4: eine synchron arbeitende mechanische Kopplung der in einem stereoskopischen Beobachtungsstrahlengang angeordneten Drehkeilpaare,
- Fig. 5: einen im Beobachtungsstrahlengang drehbar angeordneten Stufenvergrößerungswechsler,
- Fig. 6a - 6c: einen mit verschiebbaren Linsengruppen ausgestatteten stufenlos arbeitenden Vergrößerungswechsler,
- Fig. 7a - 7b: zwei Pupillenverlagerungssysteme unterschiedlicher Baulänge,
- Fig. 8a - 8d: verschiedene Kombinationsmöglichkeiten der Pupillenverlagerungssysteme (gem. Fig. 7a-7b) an einem Operationsmikroskop für zwei Operateure.

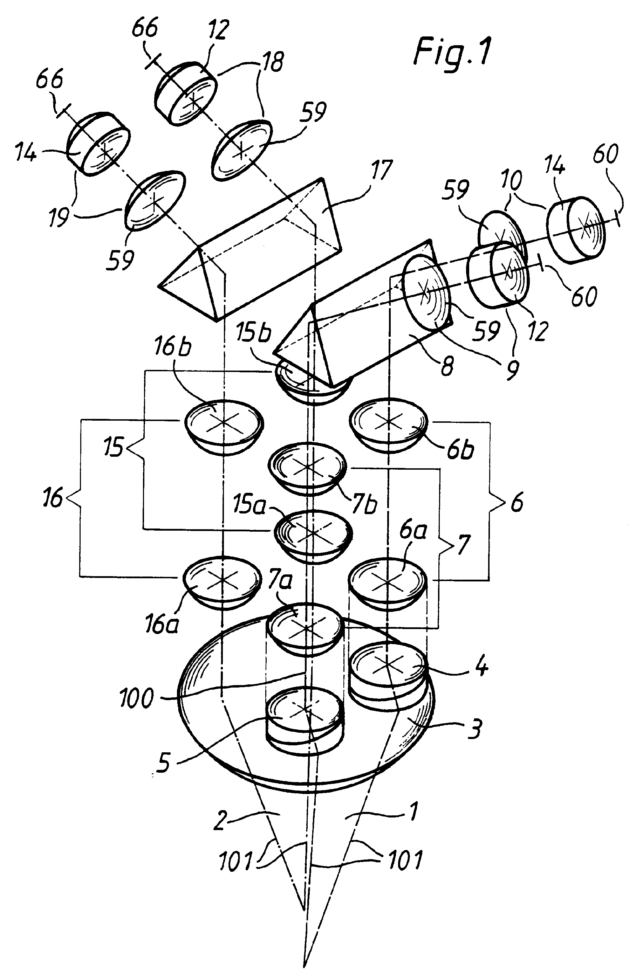

Die Figur 1 zeigt eine erfindungsgemäße Anordnung von zwei separat ausgebildeten stereoskopischen Beobachtungsstrahlengängen 1;2 in einem nicht mit dargestellten Operationsmikroskop. Dabei ist in den Beobachtungsstrahlengängen 1 und 2 ein gemeinsames, feststehendes Hauptobjektiv 3 angeordnet. Ausgehend von diesem Objektiv 3 sind im stereoskopischen Strahlengang 1 zwei Drehkeilpaare 4,5 vorgesehen. Den Drehkeilpaaren 4,5 ist jeweils ein Linsensystem 6,7 mit einzelnen Linsengruppen 6a,6b; 7a,7b nachgeordnet. Die Linsengruppen 6a,7a ermöglichen zusammen mit den Drehkeilpaaren 4,5 eine Veränderung der Schnittweite des Hauptobjektivs 4 und zusammen mit den nachgeordneten Linsengruppen 6b,7b eine Veränderung des Abbildungsmaßstabs.

Zur Strahlumlenkung in den hier nicht mit dargestellten binokularen Tubus ist den Linsensystemen 6,7 ein gemeinsames Umlenkprisma 8 sowie ein weiteres Paar von Linsensystemen 59,12; 59,14 , die einzelne Fernrohre 9;10 bilden, vorgesehen. Die mit dem Bezugszeichen 60 dargestellte Ebene kennzeichnet die Tubusauflagefläche.

Analog zum stereoskopischen Beobachtungsstrahlengang 1 weist der dazu teilweise parallel verlaufende zweite Beobachtungsstrahlengang 2 ein Linsensystempaar 15,16 mit einzelnen Linsengruppen 15a,15b; 16a,16b auf. Diese Linsensysteme dienen ebenfalls der Änderung des Abbildungsmaßstabes, wobei an dieser Stelle darauf hingewiesen werden soll, daß die Strahlengänge 1 und 2 vollkommen getrennt voneinander verlaufen und symmetrisch um die optische Achse 100 des Hauptobjektivs 3 angeordnet sind. Nur aus Darstellungsgründen überlagern sich diese Strahlengänge 1,2 im Bereich der Linsensysteme 7 und 15 in der Figur 1.

Im stereoskopischen Strahlengang 2 sind, äquivalent zum Strahlengang 1, zur Strahlumlenkung ein Umlenkprisma 17 sowie ein weiteres Paar von Linsensystemen 59,14; 59,12 , die ebenso einzelne Fernrohre 19;18 bilden, vorgesehen. Die Tubusauflagefläche ist hier mit dem Bezugszeichen 66 gekennzeichnet.

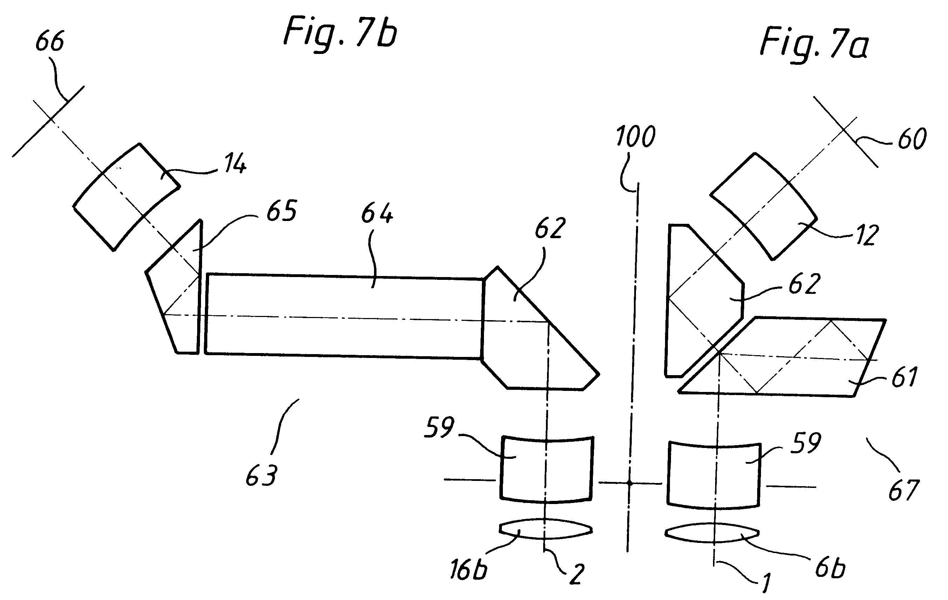

Die Linsensysteme 59 sind aus Gründen der Übersichtlichkeit in der Figur 1 zwischen den Prismen 8;17 und den Linsensystemen 12,14 dargestellt. In den Figuren 7a und 7b, in denen die Umlenkprismen 8;17 durch ein Prismensystem dargestellt werden, ist eine geänderte Anordnung gezeichnet und beschrieben.

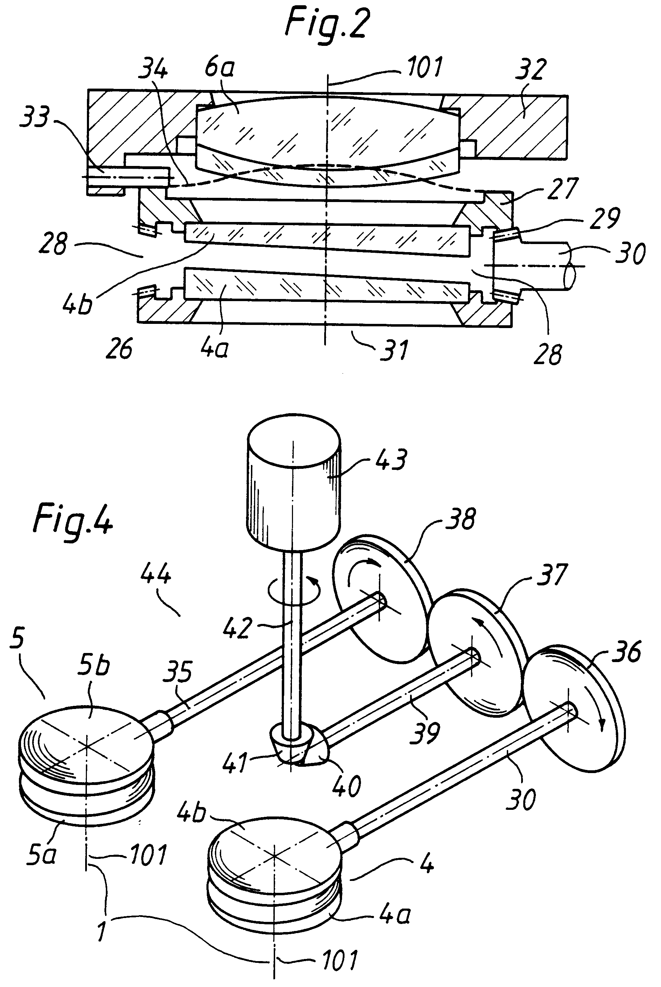

In der Figur 2 ist die Innenfokussierung zur individuellen Fokuseinstellung mit den einzelnen übereinander angeordneten optischen Keilen 4a und 4b sowie der Linsengruppe 6a dargestellt. Die Keile 4a,4b sind in jeweils separat drehbaren zylindrischen Fassungen 26,27 derart angeordnet, daß zwischen diesen Fassungen 26,27 eine umlaufende Kegelverzahnung 28 gebildet wird. In diese greift ein Kegelrad 29, das mit einer sich daran anschließenden Antriebswelle 30 verbunden ist. Eine Drehbewegung des Kegelrads 29 wird somit auf die beiden zylindrischen Fassungen 26 und 27 übertragen, so daß diese gegenläufig um die optische Achse 101 bewegt werden.

Die hier dargestellte Linsengruppe 6a ist in einer weiteren Fassung 32 angeordnet, die entlang der Achse 101 bewegbar ausgeführt ist. An der Fassung 32 ist ein Steuerglied 33 fest angeordnet, welches sich am oberen Rand 34 der Fassung 27 abstützt.

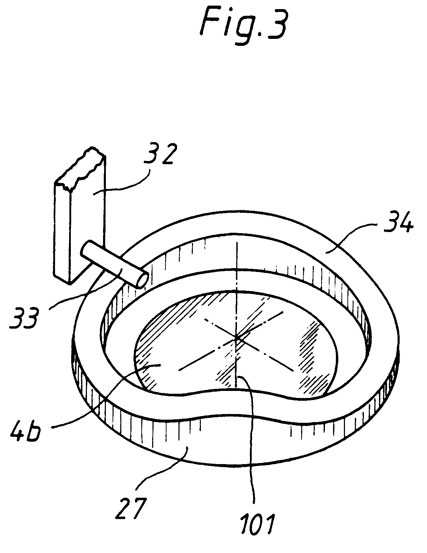

Der Fassungsrand 34 ist in der Figur 3 näher dargestellt und weist ein wellenförmiges Profil auf. Dabei sind hier zwei sich jeweils gegenüberliegende Maxima und Minima vorgesehen. Das Steuerglied 33 steht in Wirkverbindung mit dem wellenförmigen Fassungsrand 34, so daß aus einer Drehbewegung der Keilfassung 27 eine lineare Bewegung der Linsensystemfassung 32 entlang der Achse 101 resultiert.

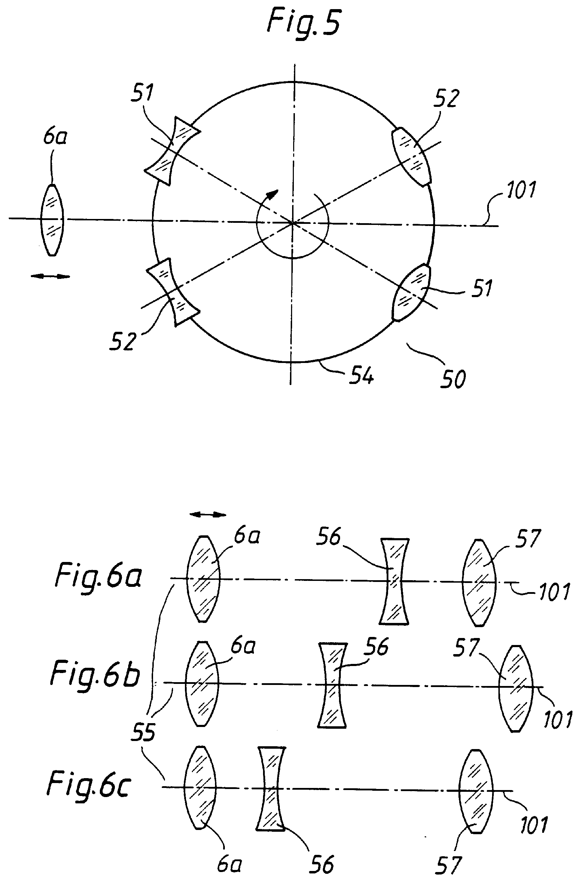

Die Figur 4 zeigt eine synchron arbeitende mechanische Kopplung der im stereoskopischen Beobachtungsstrahlengang 1 angeordneten beiden Drehkeilpaare 4 und 5 über eine gemeinsame Antriebseinheit 44. Wie bereits zur Figur 2 ausgeführt, sind die optischen Keilpaare 4,5 über Kegelräder 29 im Beobachtungsstrahlengang 1 drehbar ausgebildet. Letztere sind über Antriebswellen 30 und 35 verbunden, denen jeweils ein Zahnrad 36 bzw. 38 zugeordnet ist. Zwischen beiden Zahnrädern 36,38 ist ein gemeinsames Antriebszahnrad 37 angeordnet, welches über eine Welle 39, zusätzliche Kegelräder 40 und 41 und eine weitere Welle 42, an einen Antriebsmotor 43 gekoppelt ist. Dadurch wird eine Drehbewegung des Motors 43 auf die beiden Drehkeilpaare 4 und 5 synchron übertragen. Eine Motordrehrichtung und die daraus resultierenden einzelnen Drehrichtungen der Zahnräder 36,37,38 sind durch Pfeile in der Figur 4 dargestellt.

In der Figur 5 ist ein Stufenvergrößerungswechsler 50 dargestellt, der beispielsweise die in der Figur 1 abgebildeten Linsensysteme 15 bzw. 16 ersetzen kann. Der Wechsler 50 weist fest zugeordnete Linsenkombinationen 51 und 52 auf, die auf einem drehbaren Revolver 54 angeordnet sind und in die optische Achse 101 gedreht werden können. Ein derartiger Wechsler 50 kann paarweise im Beobachtungsstrahlengang 1,2 vorgesehen werden, so daß verschieden definierte und abgestimmte Abbildungsmaßstabsänderungen vorgenommen werden können.

Die Figuren 6a - 6c zeigen einen mit verschiedenen Linsengruppen 56,57 ausgestatteten stufenlos arbeitenden Vergrößerungswechsler 55, der beispielsweise zusätzlich die Linsensysteme 6,7; 15,16 aus der Figur 1 ergänzt. Durch eine Bewegung der Linsengruppen 56,57 entlang der optischen Achse läßt sich der Abbildungsmaßstab auch bei einem feststehenden Hauptobjektiv 3 stufenlos ändern.

Die Figuren 7a und 7b zeigen Varianten zur individuellen Änderung des Arbeitsabstandes zwischen der Tubusauflagefläche 60; 66 und der optischen Achse 100 des Hauptobjektivs 3.

In der Figur 7a ist im Beobachtungsstrahlengang 1, ausgehend von der Linsengruppe 6b (vgl. Figur 1), die Linse 59, ein Pupillenverlagerungssystem 67 kurzer Bauart mit einem Faltungsprisma 61 mit vier Spiegelungen, einem Dachkantprisma 62 sowie dem Linsensystem 12 dargestellt.

Die Figur 7b zeigt im Gegensatz zur Figur 7a ein Pupillenverlagerungssystem 63 langer Bauart, bei dem im Beobachtungsstrahlengang 2 die Linse 59, das Dachkantprisma 62, eine planparallele Platte 64 zur Abstandsverlängerung, ein Bauernfeindprisma 65 sowie das Linsensystem 14 angeordnet ist. Dabei bilden die Linsen 14 und 59 das in der Figur 1 dargestellte Fernrohr 18;19 bzw. 9;10. Die Auflagefläche für den binokularen Tubus ist mit 66 bezeichnet.

Die in den Figuren 7a und 7b dargestellten Pupillenverlagerungssysteme 63,67 weisen, trotz ihrer unterschiedlichen mechanischen Baulängen, gleiche optische Wege auf, so daß die Strahlengänge nicht von den unterschiedlichen mechanischen Baulängen beeinflußt werden.

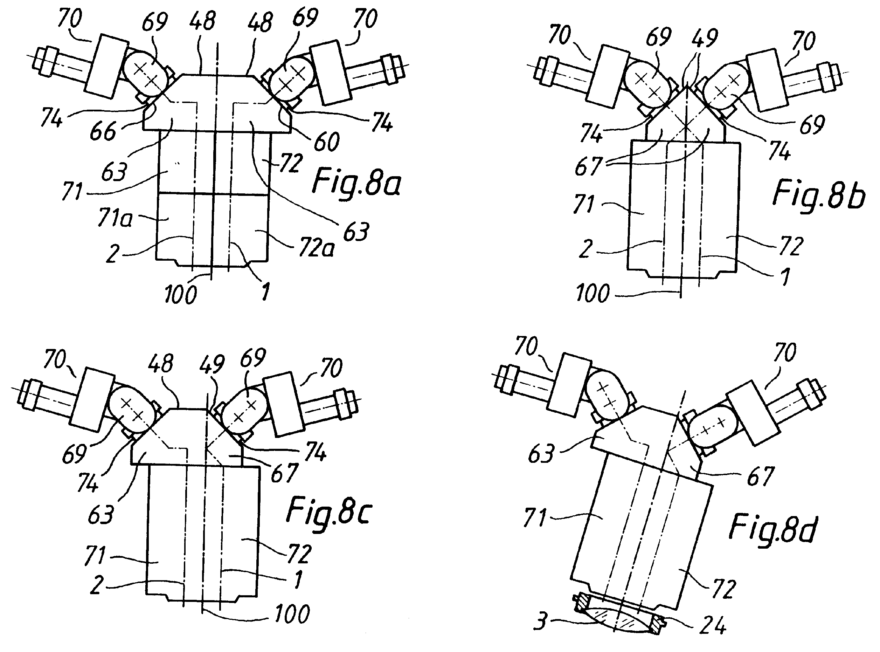

In den Figuren 8a - 8d sind die verschiedenen Kombinationsmöglichkeiten der Pupillenverlagerungssysteme 67,63 (vgl. Fig. 7a-7b) an einem Operationsmikroskop für zwei Operateure dargestellt. Zur individuellen Änderung des Arbeitsabstandes zwischen dem Tubus 70 mit dem Okular und der optischen Achse 100 sind die Pupillenverlagerungssysteme 67 und 63 in separaten Gehäusen 48 und 49 angeordnet. Die dargestellten Beobachtungstuben 70 sind über jeweils ein Drehgelenk 74 auf die Flächen 60; 66 gesetzt und weisen jeweils Gelenke 69 auf, über die der Tubus verschwenkt werden kann. Die Baulängen der Gehäuse 48 und 49 entlang der Achse 100 sind aufeinander abgestimmt. Dadurch lassen sich beliebige Kombinationen von Pupillenverlagerungssystemen 67,63 an einem einzigen Operationsmikroskop verwirklichen und somit können die unterschiedlichen Operationsdisziplinen mit einem individuell angepaßten Mikroskop durchgeführt werden. Ferner sind hier die Vergrößerungs- und Fokussysteme in separat austauschbaren Gehäusen 71;72;71a;72a angeordnet, so daß - wie zu den Pupillenverlagerungssystemen bereits ausgeführt wurde - eine individuelle Konfigurationsänderung des Mikroskops durchgeführt werden kann.

In der Figur 8a sind zwei Pupillenverlagerungssysteme 63 langer Bauart miteinander kombiniert, während in der Figur 8b zwei Systeme 67 kurzer Bauart dargestellt sind. Die Kombination eines Pupillenverlagerungssystems 67 mit einem System 63 ist in den Figuren 8c und 8d gezeigt.

In der Figur 8d ist außerdem das Hauptobjektiv 3 mit einer Bajonettfassung 24 dargestellt, sodaß ein einfacher Objektivwechsel am Mikroskop durchgeführt werden kann.

Üblicherweise werden derartige Operationsmikroskope an einem Stativ schwenkbar befestigt. Dabei ermöglichen die unterschiedlichen Pupillenverlagerungssysteme 67,63, gemäß dem Beispiel der Figur 8d, eine individuelle Anpassung des Arbeitsabstandes bei gekipptem Mikroskop.

Die Funktionsweise des Operationsmikroskops für zwei Operateure mit der Möglichkeit unterschiedlicher Objektebenen einstellen zu können, wird nachstehend näher erläutert. Das gesamte Mikroskop ist in an sich bekannter Weise an einem Stativ (nicht mit dargestellt) befestigt und wird durch Abstandsänderung zwischen dem Hauptobjektiv 3 und der Objektstelle fokussiert. Mit Bezug auf die Figur 1 ist der Beobachtungsstrahlengang 2 nach dieser Maßnahme fokussiert ausgebildet.

Eine durch das Hauptobjektiv 3 abgebildete Objektstelle kann stereoskopisch nur dann gesehen werden, wenn diese hinter dem Linsensystem 6,7 bzw. 15,16 unter gleichem Blickwinkel erscheint. Im Beobachtungsstrahlengang 2 ist dies bei afokalen Vergrößerungssystemen 15,16 nur für Objektpunkte in der vorderen Brennebene des Hauptobjektivs 3 gegeben. Im Beobachtungsstrahlengang 1 liegt eine Objektstelle nicht in der vorderen Brennebene des Hauptobjektivs 3. Die von einem solchen Objektpunkt ausgehenden Lichtbündel bilden an der Eintrittsöffnung der Drehkeilpaare 4,5 zusammen- oder auseinanderlaufende Kegelstümpfe, deren Achsen nicht parallel verlaufen.

Über die Drehkeilpaare werden diese Kegelachsen parallel ausgerichtet. Dazu wird, wie bereits zu den Figuren 2 - 4 ausgeführt, eine synchrone Drehung der Keilpaare 4,5 vorgenommen. Diese Drehung hat die Folge, daß die Summe der Winkel der Keilflächen zur optischen Achse 101 der Linsensysteme 6,7 verändert und dadurch eine variable Ablenkung bewirkt wird.

Durch Verschieben der Linsengruppen 6a,7a längs der optischen Achse der Linsensysteme 6,7 werden die die Drehkeilpaare 4,5 durchsetzenden Lichtbündel in die Brennebene der Linsengruppen 6b,7b fokussiert, so daß die Objektstelle hinter den Linsensystemen 6,7 unter gleichem Blickwinkel erscheint und stereoskopisch gesehen werden kann. Ohne die Stellung des Operationsmikroskops zu verändern, läßt sich so für den Beobachtungsstrahlengang 1 eine individuelle Objektebene wählen.

Selbstverständlich liegt es im Rahmen der Erfindung, wenn auch im Beobachtungsstrahlengang 2 derartige Fokussysteme zusätzlich angeordnet werden. Damit läßt sich auch der Strahlengang 2 unabhängig fokussieren, ohne dabei das gesamte Mikroskop in seiner Lage zum Objekt zu verändern.

Soll zusätzlich zur Fokussierebene auch noch eine individuelle Vergrößerung gewählt werden, so können die Linsensysteme 6,7 bzw. 15;16 z.B. gegen die Linsensysteme aus den Figuren 5 oder 6a - 6c ausgetauscht werden. Gemäß der Figur 5 werden feste Änderungen des Abbildungsmaßstabes gewählt, während in den Figuren 6a - 6c eine kontinuierliche Veränderung der Vergrößerung erreicht wird. Dabei wird die Linse 56,57 (Fig. 6a - 6c) in ihrer Lage entlang der Achse 101 (Fig. 2) verschoben. Zur Fokuseinstellung ist die Linse 6a entlang der Achse 101 verschiebbar angeordnet. Die Verschiebung der Linse 6a wird so gewählt, daß die eingestellte Objektebene durch die Linse 6a in eine ortsfeste Lage abgebildet wird. Dadurch sind die auf die Linse 6a folgenden Glieder eines Vergrößerungswechslers unabhängig von der Fokussierung.

## Patentansprüche

1. Operationsmikroskop für mindestens zwei Operateure mit einem Hauptobjektiv und nachgeordneten optischen Systemen (6,7 ; 15,16) zur Veränderung des Vergrößerungsmaßstabs, wobei die Systeme (6,7 ; 15,16) zur Bildung von von einander unabhängigen stereoskopischen Beobachtungsstrahlengängen (1;2) paarweise parallel zur optischen Achse (100) des Hauptobjektivs (3) angeordnet sind, **dadurch gekennzeichnet,** daß zwischen dem Hauptobjektiv (3) und mindestens einem Paar der optischen Systeme (6,7) in jedem Beobachtungsstrahlengang ein Drehkeilpaar (4;5) angeordnet ist und daß die Frontlinsen (6a,7a) der zugehörigen optischen Systeme (6,7) beweglich sind und eine Innenfokussierung des mindestens einen Paars der optischen Systeme (6,7) bewirken.

2. Operationsmikroskop nach Anspruch 1, **dadurch gekennzeichnet,** daß die optischen Vergrößerungssysteme (6,7) mindestens zwei Linsengruppen (6a,6b; 7a,7b) aufweisen, wobei zur Fokussierung jeweils die erste dieser Linsengruppen (6a;7a) mit dem Drehkeilpaar (4,5) mechanisch gekoppelt und parallel zur optischen Achse (100) des Hauptobjektivs (3) bewegbar ausgebildet sind.

3. Operationsmikroskop nach Anspruch 1 - 2, **dadurch gekennzeichnet,** daß jedes der Drehkeilpaare (4;5) mindestens zwei übereinander angeordnete optische Keile (4a,4b;5a,5b) in jeweils separaten Fassungen (26,27) aufweist, wobei die Fassungen (26,27) über eine gemeinsame Antriebseinheit (44) gegeneinander drehend um die optische Achse (101) der jeweiligen optischen Systeme (6;7) bewegbar ausgebildet sind.

4. Operationsmikroskop nach Anspruch 3, dadurch gekennzeichnet, daß die jeweils erste Linsengruppe (6a,7a) der optischen Systeme (6,7) in je einer Fassung (32) angeordnet ist, diese sich an der Fassung (27) des optischen Keils (4b;5b) abstützt, so daß die jeweils erste Linsengruppe (6a,7a) gemeinsam mit den optischen Keilen (4b;5b) bewegbar ausgebildet ist.

5. Operationsmikroskop nach Anspruch 4, **dadurch gekennzeichnet,** daß die Fassungen (27) als Zylinder ausgebildet sind, wobei der den Linsengruppen (6a,7a) zugewandte Fassungsrand (34) ein Wellenprofil aufweist.

6. Operationsmikroskop nach Anspruch 3 oder Anspruch 4, **dadurch** **gekennzeichnet,** daß zwischen den Fassungen (26,27) je ein Antriebsrad (29) angeordnet ist, dieses über je eine Welle (30,35) mit je einem Zahnrad (36,38) verbunden ist und zum synchronen Antrieb die Zahnräder (36,38) mit einem gemeinsamen Antriebszahnrad (37) in Wirkverbindung stehen.

7. Operationsmikroskop nach Anspruch 6, **dadurch gekennzeichnet,** daß dem Antriebszahnrad (37) ein Motor (43) zugeordnet ist.

8. Operationsmikroskop nach mindestens einem der vorherigen Ansprüche, **dadurch gekennzeichnet,** daß am Mikroskop ein Triebkasten zur gemeinsamen Fokussierung aller Beobachtungsstrahlengänge (1,2) vorgesehen ist.

9. Operationsmikroskop nach mindestens einem der vorherigen Ansprüche, **dadurch gekennzeichnet,** daß die optischen Systeme (6,7) als stufenlose Vergrößerungseinheit (55) ausgebildet sind und zur Änderung des Abbildungsmaßstabes mindestens eine axial verschiebliche dritte Linsengruppe (56,57) aufweisen.

10. Operationsmikroskop nach mindestens einem der vorherigen Ansprüche1 bis 8, **dadurch gekennzeichnet,** daß die optischen Systeme (6,7) als Stufenvergrößerungseinheit (50) ausgebildet sind und einen im Beobachtungsstrahlengang (1;2) drehbaren Revolver (54) aufweisen.

11. Operationsmikroskop nach mindenstens einem der vorherigen Ansprüche, **dadurch gekennzeichnet,** daß das Hauptobjektiv (3) austauschbar am Mikroskop angeordnet ist.

12. Operationsmikroskop nach Anspruch 11, **dadurch gekennzeichnet,** daß zur lösbaren Befestigung des Hauptobjektivs (3) am Mikroskop ein Objektivbajonett (24) vorgesehen ist.

13. Operationsmikroskop nach mindestens einem der vorhergehenden Ansprüche, **dadurch gekennzeichnet,** daß den optischen Linsensystemen (6,7; 15,16) Pupillenverlagerungssysteme (63;67) nachgeordnet sind.

14. Operationsmikroskop nach Anspruch 13, **dadurch gekennzeichnet,** daß die Pupillenverlagerungssysteme (63,67) als separat austauschbare Baueinheiten (48;49) ausgebildet sind und zur individuellen Anpassung des Arbeitsabstandes zur optischen Achse (100) des Hauptobjektivs (3) unterschiedliche mechanische Baulängen aufweisen.

15. Operationsmikroskop nach Anspruch 14, **dadurch gekennzeichnet,** daß die differierenden mechanischen Baulängen durch unterschiedliche optische Strahlengänge bei gleichen optischen Wegen in den Pupillenverlagerungssystemen (63,67) kompensiert werden.

16. Operationsmikroskop nach Anspruch 15, **dadurch gekennzeichnet,** daß die Pupillenverlagerungssysteme (63;67) jeweils ein aus mindestens zwei Linsen gebildetes Fernrohr (9,10;18,19) aufweisen.

17. Operationsmikroskop nach Anspruch 15 oder 16, **dadurch gekennzeichnet,** daß das Pupillenverlagerungssystem (67) ein Faltungsprisma (61) mit vier Spiegelungen sowie ein Dachkantprisma (62) zur Bildaufrichtung und Strahlumlenkung aufweist.

18. Operationsmikroskop nach Anspruch 15 oder 16, **dadurch gekennzeichnet,** daß das Pupillenverlagerungssystem (63) ein Dachkantprisma (62) zur Bildaufrichtung und Strahlumlenkung, eine planparallele Platte (64) zur Abstandsverlängerung sowie ein Bauernfeindprisma (65) aufweist.

19. Operationsmikroskop nach den Ansprüchen 16 - 18, **dadurch gekennzeichnet,** daß die Pupillenverlagerungssysteme (63,67) Fernrohre (9,10; 18,19) sowie ein Dachkantprisma (62) gleicher Bauart aufweisen.

20. Operationsmikroskop nach mindestens einem der vorherigen Ansprüche 13 bis 19, **dadurch gekennzeichnet,** daß die Pupillenverlagerungssysteme (67;63) eine Tubusauflagefläche (60;66) aufweisen die vorzugsweise unter 45° zur optischen Achse (100) des Hauptobjektivs (3) geneigt ausgebildet ist und daß mindestens ein Gelenk (74) zur Drehung der Binokulartuben (70) um die Achsen (101) der Beobachtungsstrahlengänge (1;2) vorgesehen ist.

21. Operationsmikroskop nach mindestens einem der vorherigen Ansprüche, **dadurch gekennzeichnet,** daß die optischen Vergrößerungssysteme (6,7; 15,16) als separate Baueinheiten ausgebildet und in austauschbaren Gehäusen (71;71a;72;72a) angeordnet sind.

22. Operationsmikroskop nach Anspruch 21, **dadurch gekennzeichnet,** daß das Mikroskop aus einzelnen wechselbaren modularen Systemeinheiten (48;49;71;71a;72;72a;3) aufgebaut ist.

## Claims

1. Surgical microscope for at least two surgeons with a main objective and optical systems (6, 7; 15, 16) connected therebehind for variation of the scale of magnification, wherein the systems (6, 7; 15, 16) are arranged in pairs parallelly to the optical axis (100) of the main objective (3) for the formation of mutually independent stereoscopic observation ray paths (1:2), characterised thereby, that a rotary wedge pair (4; 5) is arranged in each observation ray path between the main objective (3) and at least one pair of the optical systems (6, 7) and that the front lenses (6a, 7a) of the associated optical systems (6, 7) are movable and effect an internal focussing of the at least one pair of the optical systems (6, 7).

2. Surgical microscope according to claim 1, characterised thereby, that the optical magnification systems (6, 7) display at least two lens groups (6a, 6b; 7a, 7b), wherein the first of these lens groups (6a, 6b) is each time mechanically coupled with the rotary wedge pair (4, 5) and constructed to be movable parallelly to the optical axis (100) of the main objective (3) for focussing.

3. Surgical microscope according to claim 1 and 2, characterised thereby, that each of the rotary wedge pairs (4, 5) displays at least two optical wedges (4a, 4b; 5a, 5b) arranged one above the other in respective separate mounts (26, 27), wherein the mounts (26, 27) are constructed to be movable, each rotating relative to the other about the optical axis (101) of the respective optical systems (6; 7), by way of a common drive unit (44).

4. Surgical microscope according to claim 3, characterised thereby, that the respective first lens group (6a, 7a) of each of the optical systems (6, 7) is arranged in a respective mount (32), which bears against the mount (27) of the optical wedge (4b; 5b) so that the respective first lens group (6a, 7a) is constructed to be movable together with the optical wedges (4b; 5b).

5. Surgical microscope according to claim 4, characterised thereby, that the mounts (27) are constructed as cylinders, wherein the mount rim (34) facing the lens groups (6a, 7a) displays a wavy profile.

6. Surgical microscope according to claim 3 or 4, characterised thereby, that a respective drive wheel (29) is arranged between the mounts (26, 27) and connected by way of a respective shaft (30, 35) with a respective toothed wheel (36, 38) and the toothed wheels (36, 38) stand in operative connection with a common toothed driving wheel (37) for synchronous drive.

7. Surgical microscope according to claim 6, characterised thereby, that a motor (43) is associated with the toothed driving wheel (37).

8. Surgical microscope according to at least one of the preceding claims, characterised thereby, that a pinion box for the common focussing of all observation ray paths (1, 2) is provided at the microscope.

9. Surgical microscope according to at least one of the preceding claims, characterised thereby, that the optical systems (6, 7) are constructed as stepless magnifying unit (55) and display at least one axially displaceable third lens group (56, 57) for variation of the scale of magnification.

10. Surgical microscope according to at least one of the preceding claims 1 to 8, characterised thereby, that the optical systems (6, 7) are constructed as stepped magnification unit (50) and display a turret (54), which is rotatable in the observation ray path (1; 2).

11. Surgical microscope according to at least one of the preceding claims, characterised thereby, that the main objective (3) is arranged at the microscope to be exchangeable.

12. Surgical microscope according to claim 11, characterised thereby, that a bayonet objective fastener (24) is provided at the microscope for the detachable fastening of the main objective (3).

13. Surgical microscope according to at least one of the preceding claims, characterised thereby, that pupil redisposition systems (63; 67) are arranged behind the optical lens systems (6, 7; 15, 16).

14. Surgical microscope according to claim 13, characterised thereby, that the pupil redisposition systems (63; 67) are constructed as separately exchangeable assemblies (48; 49) and display different overall mechanical lengths for the individual adaptation of the operative spacing to the optical axis (100) of the main objective (3).

15. Surgical microscope according to claim 14, characterised thereby, that the different overall mechanical lengths are compensated for by different optical ray paths for equal optical paths in the pupil redisposition systems (63; 67).

16. Surgical microscope according to claim 15, characterised thereby, that the pupil redisposition systems (63; 67) each display a respective telescope (9, 10; 18, 19) formed of at least two lenses.

17. Surgical microscope according to claim 15 or 16, characterised thereby, that the pupil redisposition system (67) displays a folding prism (61) with four reflections as well as a pentaprism (62) for image inversion and beam deflection.

18. Surgical microscope according to claim 15 or 16, characterised thereby, that the pupil redisposition system (63) displays a pentaprism (62) for image inversion and beam deflection, a parallelly planar plate (64) for the prolongation of the spacing as well a Bauernfeind prism (65).

19. Surgical microscope according to the claims 16 to 18, characterised thereby, that the pupil redisposition systems (63; 67) display telescopes (9, 10; 18, 19) as well as a pentaprism (62) of like mode of construction.

20. Surgical microscope according to at least one of the preceding claims 13 to 10, characterised thereby, that the pupil redisposition systems (63; 67) display a tubus support surface (60; 66), which is preferably formed to be inclined at 45° to the optical axis (100) of the main objective (3) and that at least one joint (74) is provided for the rotation of the binocular tubes (70) about the axes (101) of the observation ray paths (1; 2).

21. Surgical microscope according to at least one one of the preceding claims, characterised thereby, that the optical magnification systems (6, 7; 15, 16) are constructed as separate assemblies and arranged in exchangeable housings (71; 71a; 72; 72a).

22. Surgical microscope according to claim 21, characterised thereby, that the microscope is built up of individual exchangeable modular system units (48; 49; 71; 71a, 72; 72a; 3).

## Revendications

1. Microscope d'opération pour au moins deux opérateurs avec un objectif principal et des systèmes optiques (6, 7 15, 16) disposés à la suite pour modifier l'échelle d'agrandissement, les systèmes (6, 7 ; 15, 16) pour former des trajets de rayons d'observation stéréoscopiques indépendants l'un de l'autre (1 ; 2) sont disposés par paires parallèlement à l'axe optique (100) de l'objectif principal (3), caractérisé en ce qu'il est disposé entre l'objectif principal (3) et au moins une paire des systèmes optiques (6, 7) dans chaque trajet de rayons d'observation une paire de coins compensateurs (4 ; 5) , et en ce que les lentilles avant (6a, 7a) des systèmes optiques (6, 7) associés sont mobiles et provoquent une focalisation intérieure de ladite, au moins une, paire des systèmes optiques (6, 7).

2. Microscope d'opération selon la revendication 1, caractérisé en ce que les systèmes d'agrandissement optiques (6, 7) présentent au moins deux groupes de lentilles (6a, 6b ; 7a, 7b), et pour la focalisation, respectivement, le premier de ces groupes de lentilles (6a ; 7a) est accouplé mécaniquement à la paire de coins compensateurs (4, 5) et est réalisé de façon déplaçable parallèlement à l'axe optique (100) de l'objectif principal.

3. Microscope d'opération selon la revendication 1-2, caractérisé en ce que chacune des paires de coins compensateurs (4 ; 5) présente au moins deux coins optiques disposés l'un sur l'autre (4a, 4b ; 5a, 5b) dans des montures (26, 27) respectivement séparées, les montures (26, 27) étant réalisées de façon déplaçable par une unité d'entraînement commune (44) en tournant l'une contre l'autre autour de l'axe optique (101) des systèmes optiques (6 ;7) respectifs.

4. Microscope d'opération selon la revendication 3, caractérisé en ce que le premier groupe de lentilles (6a, 7a) respectivement des systèmes optiques (6, 7) est disposé dans une monture (32), que celle-ci prend appui sur la monture (27) du coin optique (4b ; 5b) de sorte que le premier groupe de lentilles (6a, 7a) respectivement est réalisé de façon déplaçable conjointement aveç les coins optiques (4b ; 5b).

5. Microscope d'opération selon la revendication 4, caractérisé en ce que les montures (27) sont réalisées sous forme de cylindre, le bord de monture (34) orienté vers les groupes de lentilles (6a, 7a) ayant un profil ondulé.

6. Microscope d'opération selon la revendication 3 ou la revendication 4, caractérisé en ce qu'il est disposé entre les montures (26, 27) respectivement une roue d'entraînement (29), que celle-ci est reliée respectivement par un arbre (30, 35) respectivement à une roue dentée (36, 38), et que pour l'entraînement synchrone, les roues dentées (36, 38) sont en liaison active avec une roue dentée d'entraînement (37) commune.

7. Microscope d'opération selon la revendication 6, caractérisé en ce qu'il est associé à la roue dentée d'entraînement (37) un moteur (43).

8. Microscope d'opération selon au moins l'une des revendications précédentes, caractérisé en ce qu'il est prévu au microscope une boîte motrice pour la focalisation commune de tous les trajets de rayon d'observation (1, 2).

9. Microscope d'opération selon au moins l'une des revendications précédentes, caractérisé en ce que les systèmes optiques (6, 7) sont réalisés sous forme d'unités d'agrandissement progressives (55) et présentent pour la modification de l'échelle de représentation au moins un troisième groupe de lentilles (56, 57) déplaçable axialement.

10. Microscope d'opération selon au moins l'une des revendications 1 à 8, caractérisé en ce que les systèmes optiques (6, 7) sont réalisés sous forme d'unités d'agrandissement graduelles (50) et présentent un dispositif à revolver (54) tournant dans le trajet des rayons d'observation (1 ; 2).

11. Microscope d'opération selon au moins l'une des revendications précédentes, caractérisé en ce que l'objectif principal (3) est disposé de façon échangeable au microscope.

12. Microscope d'opération selon la revendication 11, caractérisé en ce qu'il est prévu pour la fixation amovible de l'objectif principal (3) au microscope une baïonnette à objectif (24).

13. Microscope d'opération selon au moins l'une des revendications précédentes, caractérisé en ce que des systèmes de déplacement de pupilles (63 ; 67) sont disposés à la suite des systèmes à lentilles optiques (6, 7 ; 15, 16).

14. Microscope d'opération selon la revendication 13, caractérisé en ce que les systèmes de déplacement de pupilles (63, 67) sont réalisés sous forme d'unités de construction (48 ; 49) échangeables séparément et présentent pour l'adaptation individuelle de l'écartement de travail relativement à l'axe optique (100) de l'objectif principal (3) des longueurs de construction mécanique différentes.

15. Microscope d'opération selon la revendication 14, caractérisé en ce que les longueurs de construction mécanique différentes sont compensées par des trajets de rayons optiques différents pour des mêmes chemins optiques dans les systèmes de déplacement de pupilles (63, 67).

16. Microscope d'opération selon la revendication 15, caractérisé en ce que les systèmes de déplacement de pupilles (63 ; 67) présentent respectivement une lunette (9, 10 ; 18, 19) constituée d'au moins deux lentilles.

17. Microscope d'opération selon la revendication 15 ou 16, caractérisé en ce que le système de déplacement de pupilles (67) présente un prisme de pliage (61) avec quatre réflexions ainsi qu'un prisme triangulaire (62) pour le redressement de l'image et la déviation des rayons.

18. Microscope d'opération selon la revendication 15 ou 16, caractérisé en ce que le système de déplacement de pupilles (63) présente un prisme triangulaire (62) pour le redressement de l'image et la déviation des rayons, une plaque parallèle en plan (64) pour l'augmentation de la distance ainsi qu'un prisme de Bauernfeind (65).

19. Microscope d'opération selon les revendications 16-18, caractérisé en ce que les systèmes de déplacement de pupilles (63, 67) présentent des lunettes (9, 10 ; 18, 19) ainsi qu'un prisme triangulaire (62) du même type de construction.

20. Microscope d'opération selon au moins l'une des revendications 13 à 19, caractérisé en ce que les systèmes de déplacement de pupilles (67 ; 63) présentent une surface d'appui de tube (60 ; 66) qui est de préférence inclinée suivant 45° relativement à l'axe optique (100) de l'objectif principal (3), et en ce qu'il est prévu au moins une articulation (74) pour faire tourner les tubes du binoculaire (70) autour des axes (101) des trajets des rayons d'observation (1 ; 2).

21. Microscope d'opération selon au moins l'une des revendications précédentes, caractérisé en ce que les systèmes d'agrandissement optiques (6, 7 ; 15, 16) sont réalisés sous forme d'unités de construction séparées et sont disposés dans des boîtiers échangeables (71 ; 71a ; 72 ; 72a).

22. Microscope d'opération selon la revendication 21, caractérisé en ce que le microscope est constitué d'unités de systèmes modulaires échangeables individuellement (48 ; 49 ; 71 ; 71a ; 72 ; 72a ; 3).
